# EUROPEAN PATENT APPLICATION

(11) **EP 4 675 562 A1**
(43) Date of publication of application: **07.01.2026**
(21) Application number: 24777886.3
(22) Date of filing: 22.03.2024
(51) Int. Cl.: G06T 15/04

(54) **RENDERING METHOD AND CORRESPONDING DEVICE**

(30) Priority: 30.03.2023 CN 202310375539
(71) Applicant: Huawei Technologies Co., Ltd., Shenzhen, Guangdong 518129 (CN)
(72) Inventor: HUANG, Jingwei, Shenzhen, Guangdong 518129 (CN); SHI, Beiji, Shenzhen, Guangdong 518129 (CN); ZHANG, Yanfeng, Shenzhen, Guangdong 518129 (CN); SUN, Mingwei, Shenzhen, Guangdong 518129 (CN)
(74) Representative: Pfenning, Meinig & Partner mbB
(86) International application number: PCT/CN2024/083162
(87) International publication number: WO 2024/199097

(57) **Abstract**

This application discloses a rendering method, which may be used to render a large-scale real scene, for example, applied to applications such as a three-dimensional map and factory inspection. In the rendering method, a color value, of each pixel in a to-be-rendered image corresponding to an angle of view in which a user browses a target scene, in each of a plurality of directions corresponding to the pixel may be restored based on the angle of view and compressed texture information. The plurality of directions corresponding to each pixel are directions in which color values are sampled from a radiance field model of the target scene. Then, rendering is performed based on the color value of each pixel in the to-be-rendered image in each of the plurality of directions corresponding to the pixel. In the solutions of this application, high-fidelity real-time rendering can be implemented for a large-scale scene by using small storage space.

## Description

This application claims priority to Chinese Patent Application No. 202310375539.4, filed with the China National Intellectual Property Administration on March 30, 2023 and entitled "RENDERING METHOD AND CORRESPONDING APPARATUS", which is incorporated herein by reference in its entirety.

### TECHNICAL FIELD

This application relates to the field of image processing technologies, and specifically, to a rendering method and a corresponding apparatus.

### BACKGROUND

At present, high-fidelity real-time rendering is usually performed for a large-scale real scene using a mesh texture optimization method and a neural radiance field (neural radiance field, NeRF) method.

The mesh texture optimization method has an obvious advantage in terms of rendering efficiency based on a standard graphics rendering pipeline, but it is difficult to ensure rendering quality. However, in the neural radiance field method, a more realistic new angle of view rendering effect can be obtained through a high-precision expression of a scene, but a rendering speed is slow.

Therefore, how to implement real-time rendering while ensuring high fidelity becomes an urgent problem to be resolved.

### SUMMARY

This application provides a rendering method, to implement high-fidelity real-time rendering. This application further provides a corresponding apparatus, system, computer-readable storage medium, and computer program product, and the like.

A first aspect of this application provides a rendering method, including: obtaining an angle of view in which a user browses a target scene; for each pixel in a first image, restoring a color value of each pixel in each of P directions corresponding to the pixel based on compressed texture information, where the first image is a to-be-rendered image that is of the target scene and that corresponds to the angle of view, the P directions corresponding to each pixel are directions in which color values are sampled from a radiance field model of the target scene, P is an integer greater than 1, and the compressed texture information includes compression information of the color values in the P directions corresponding to each pixel; and rendering the first image based on the color value of each pixel in the first image in each of the P directions corresponding to the pixel, to obtain a rendered second image.

The rendering method provided in this application may be applied to rendering of a large-scale real scene, for example, a three-dimensional map or another industrial application. A rendering process may be performed on a cloud side, or may be performed on a device side. When the rendering process is performed on the cloud side, in one manner, the cloud side may obtain, from the device side, the angle of view in which the user browses the target scene, and after obtaining the second image through rendering, return the second image to the device side for display. In another manner, the cloud side performs rendering based on an angle of view in which the user browses the target scene and that is preset by a developer.

In this application, the target scene may be a scene, for example, a city, an island, or a country, that may be browsed on a three-dimensional map. Certainly, the target scene may alternatively be an industrial application scene, for example, a device in a factory or a shelf in a warehouse. The target scene is not limited in this application. The rendering solution provided in this application may be used in any scene for which rendering needs to be performed.

In this application, the angle of view may include a position and a direction. The angle of view is a field of view provided by the user or a virtual camera. The angle of view may be provided by an input apparatus such as a mouse, a keyboard, a screen, or a virtual reality (virtual reality, VR)/augmented reality (augmented reality, AR) device, or may be obtained through positioning by using an inertia measurement unit (inertial measurement unit, IMU).

In this application, both the first image and the second image are images that are of the target scene and that may be seen at a position of the angle of view. A difference lies in that the first image is an image that is not rendered, and the second image is a rendered image.

In this application, the radiance field model of the target scene is a radiance field model obtained based on a point cloud and a picture of the target scene, and the radiance field model is a function of information such as a three-dimensional coordinate point, a direction, a color, and transparency of the target scene in space.

In this application, a texture is a color value. Brightness of pixels on images corresponding to different angles of view is usually different. Therefore, even pixels at a same position may correspond to different color values in different angles of view.

It can be learned from the first aspect that, when texture sampling is performed on the target scene, color values of each pixel in a plurality of directions are obtained from the radiance field model of the target scene. In this way, more light field information can be reserved, to facilitate subsequent high-quality high-fidelity rendering. In addition, in the solution provided in this application, the compressed texture information is stored, and a color value of a pixel in a corresponding angle of view is restored only when the color value needs to be used. In this way, a storage requirement can be reduced. In addition, during rendering, rendering only needs to be performed based on the color value. Rendering may be performed through a conventional rendering pipeline, to greatly increase a rendering speed. It can be learned from the foregoing that, in the solution provided in this application, high-fidelity real-time rendering can be implemented for a large-scale scene by using small storage space.

In a possible implementation, the P directions corresponding to each pixel are directions that are closest to a first direction and that are determined from M directions, the M directions are directions that are determined through spherical uniform sampling and in which texture sampling is performed on the radiance field model of the target scene, the first direction is a direction from a position of the angle of view to a three-dimensional coordinate point corresponding to each pixel, M>P, and M is an integer.

In this possible implementation, spherical uniform sampling is to uniformly determine, on a sphere, a plurality of directions for texture sampling, for example, 64 directions, or more or fewer directions. The first direction is a direction from a three-dimensional coordinate point in space corresponding to the pixel in the first image to the position of the angle of view, or may be understood as a direction from the position of the angle of view to the three-dimensional coordinate point. The closest directions are P directions having smallest included angles with the first direction in the M directions. In this application, the smallest included angles are P included angles in first P included angles ranked in ascending order of included angles. The closest directions are not limited to a direction with a highest degree of proximity, and may also be first P directions ranked in descending order of degrees of proximity. In this application, the P directions are directions closest to the first direction. In this way, for a corresponding pixel, the color values in the P directions have highest degrees of proximity with a color value of the pixel, and can be used to improve rendering precision of the pixel.

In a possible implementation, each of the M directions corresponds to one sampled texture map, the sampled texture map indicates color values of N texture pixels in the corresponding direction, and N is an integer greater than 1.

In this possible implementation, a pixel in the texture sampling map is referred to as a texture pixel. For the target scene, texture sampling may be performed in advance in each of the M directions. Each direction corresponds to one sampled texture map, and the sampled texture map records a color value of each sampled pixel. Quantities of texture pixels in M sampled texture maps are the same, and arrangement positions of the texture pixels in the M sampled texture maps are also the same.

In a possible implementation, the compressed texture information includes a standard texture map, K compressed feature texture maps, and a weight matrix corresponding to the K feature texture maps; and the standard texture map, the K feature texture maps, and the weight matrix corresponding to the K feature texture maps are obtained based on M sampled texture maps, K is a positive integer, and (1+K)<M.

In this possible implementation, the standard texture map is a texture map that retains most complete color information, and may be understood as a color texture map. The feature texture map is a compressed texture map, and may be understood as a texture map that retains only some grayscale information. The M sampled texture maps are processed into one standard texture map and K feature texture maps, to reduce a requirement for storage space, and facilitate subsequent rendering.

In a possible implementation, a color value of each texture pixel in the standard texture map is obtained by averaging color values of texture pixels at a same position in the M sampled texture maps.

In this possible implementation, the standard texture map is obtained by averaging the color values of the texture pixels at a same position in the M sampled texture maps, to retain most complete color information, and facilitate subsequent high-quality rendering.

In a possible implementation, the K feature texture maps and the weight matrix corresponding to the K texture maps are obtained by performing dimension reduction and compression on an M*N matrix, and the M*N matrix is a matrix obtained by subtracting a color value of each texture pixel in the standard texture map from a color value of a texture pixel at a same position in the M sampled texture maps.

In this possible implementation, a difference between the M sampled texture maps and the standard texture map is obtained, and then dimension reduction and compression (which may also be referred to as low-rank compression) are performed on the M*N matrix obtained based on the difference, to reduce a data amount, and help save storage space.

In a possible implementation, the color value of each pixel in each of the P directions of each pixel is obtained by adding a 1*N matrix corresponding to the standard texture map to a product of the weight matrix corresponding to the K feature texture maps and a K*N matrix including N texture pixels in each feature texture map.

In this possible implementation, the color value of each pixel in each of the P directions of each pixel during sampling may be restored based on the K feature texture maps, the corresponding weight matrix, and the standard texture map. In this way, the information is in a compressed state when the information is not used, and a corresponding color value may be restored when the information is used. In this way, no too much storage space is occupied, and high-quality rendering may be further implemented.

In a possible implementation, the second image is obtained by rendering the first image based on a color value of each pixel in the first image in a first direction corresponding to the pixel, and the color value of each pixel in the first direction corresponding to the pixel is obtained by performing interpolation on the color value of each pixel in each of the P directions corresponding to the pixel.

In this possible implementation, because information such as brightness at a same position in different angles of view may be different, and consequently, color values at a same position in different angles of view may be different. Therefore, during image rendering, color values are obtained from a plurality of directions closest to the first direction, and then a color value in the first direction is determined, to obtain a high-fidelity image that better matches an angle of view, and improve rendering quality.

In a possible implementation, different positions in the second image are obtained through rendering based on textures at different levels, and the textures at the different levels are obtained by performing down-sampling with different sparse degrees on the standard texture map and the K feature texture maps.

In this possible implementation, when different positions of the target scene are viewed in a same angle of view, some positions may be clear, and some positions are blurry. Therefore, importance degrees of the different positions are different during rendering. In this way, rendering may be performed for different positions based on textures at different levels, to improve rendering efficiency.

In a possible implementation, M sampled texture maps corresponding to the M directions are obtained by performing texture sampling on the radiance field model of the target scene based on a two-dimensional pixel texture map.

In a possible implementation, the two-dimensional pixel texture map is obtained by performing UV parameterization processing on a three-dimensional mesh of the radiance field model.

In this possible implementation, the radiance field model of the target scene may be meshed. In this way, the radiance field model of the target scene corresponds to a three-dimensional mesh. The three-dimensional mesh indicates a position of a coordinate point of the target scene in three-dimensional space. UV parameterization processing is performed on the three-dimensional mesh to obtain the two-dimensional pixel texture map. The two-dimensional pixel texture map includes N texture pixels. Then, texture sampling is performed on the radiance field model of the target scene in different directions in the M directions for the texture pixels, to obtain the M sampled texture maps.

A second aspect of this application provides a rendering apparatus. The rendering apparatus has a function of implementing the rendering method in any one of the first aspect or the possible implementations of the first aspect. The function may be implemented by hardware, or may be implemented by hardware executing corresponding software. The hardware or software includes one or more modules or units corresponding to the foregoing function, for example, an obtaining unit, a processing unit, and a rendering unit.

A third aspect of this application provides an electronic device, including a communication interface, a processor, and a memory. The communication interface and the processor are coupled to the memory, the memory is configured to store a program or instructions, and when the program or the instructions are executed by the processor, the electronic device is enabled to perform the method according to any one of the first aspect or the possible implementations of the first aspect.

In this application, the processor may include at least one of a central processing unit (central processing unit, CPU) and a graphics processing unit (graphics processing unit, GPU). Both the CPU and the GPU can perform the image rendering process described in any one of the first aspect or the possible implementations of the first aspect, or the CPU and the GPU work with each other to perform the image rendering process described in any one of the first aspect or the possible implementations of the first aspect.

A fourth aspect of this application provides a chip system. The chip system includes one or more interface circuits and one or more processors; the interface circuit and the processor are interconnected through a line; the interface circuit is configured to: receive a signal from a memory of an electronic device, and send the signal to the processor; the signal includes computer instructions stored in the memory; when the processor executes the computer instructions, the electronic device performs the method according to any one of the first aspect or the possible implementations of the first aspect; and the processor is at least one of a CPU and a GPU.

A fifth aspect of this application provides a computer-readable storage medium. The computer-readable storage medium stores instructions. When the instructions are run on an electronic device, the electronic device is enabled to perform the method according to any one of the first aspect or the possible implementations of the first aspect.

A sixth aspect of this application provides a computer program product. The computer program product includes computer program code. When the computer program code is run on a computer, the computer is enabled to perform the method according to any one of the first aspect or the possible implementations of the first aspect.

A seventh aspect of this application provides a rendering system, including a cloud-side apparatus and a device-side apparatus. The device-side apparatus is configured to send, to the cloud-side apparatus, an angle of view in which a user browses a target scene. The cloud-side apparatus is configured to perform the method according to any one of the first aspect or the possible implementations of the first aspect. The device-side apparatus is configured to: receive a second image returned by the cloud-side apparatus, and display the second image.

An eighth aspect of this application provides a rendering system, including an electronic device. The electronic device is configured to perform the method according to any one of the first aspect or the possible implementations of the first aspect, and the electronic device is a cloud-side apparatus or a device-side apparatus.

For related features and effects of the second aspect to the eighth aspect of this application, refer to corresponding descriptions in any one of the first aspect or the possible implementations of the first aspect for understanding.

### BRIEF DESCRIPTION OF DRAWINGS

FIG. 1A is a diagram of an architecture of a rendering system according to an embodiment of this application;
FIG. 1B is a diagram of another architecture of a rendering system according to an embodiment of this application;
FIG. 1C is a diagram of a structure of an electronic device according to an embodiment of this application;
FIG. 2 is a diagram of an embodiment of a rendering method according to an embodiment of this application;
FIG. 3 is a diagram of another embodiment of a rendering method according to an embodiment of this application;
FIG. 4A is an example diagram of radiance field model initialization according to an embodiment of this application;
FIG. 4B is an example diagram of a three-dimensional mesh model according to an embodiment of this application;
FIG. 4C is an example diagram of UV parameterization according to an embodiment of this application;
FIG. 4D is an example diagram of a sampling direction according to an embodiment of this application;
FIG. 4E is an example diagram of texture compression according to an embodiment of this application;
FIG. 5A to FIG. 5C are diagrams of an effect comparison according to an embodiment of this application;
FIG. 6 is a diagram of a structure of a rendering apparatus according to an embodiment of this application; and
FIG. 7 is a diagram of a structure of a rendering apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenes, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiment described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

This application provides a rendering method, to implement high-fidelity real-time rendering. This application further provides a corresponding apparatus, system, computer-readable storage medium, and computer program product, and the like. The following separately provides detailed descriptions.

The rendering method provided in this application may be applied to various rendering scenes, for example, various fields such as movie production, video games, commercial advertisements, smart home, and augmented reality (augmented reality, AR) and virtual reality (virtual reality, VR), and is particularly applicable to rendering for a large-scale real scene, for example, industrial applications such as a three-dimensional map or factory inspection.

The rendering method provided in this application may be performed on a cloud side, or may be performed on a device side. When the rendering method is performed on the cloud side, in one manner, the cloud side may obtain, from the device side, an angle of view in which a user browses a target scene, and after obtaining a second image by rendering a first image, return the second image to the device side for display. In another manner, the cloud side performs rendering based on an angle of view that is preset by a developer. When the rendering method is performed on the device side, the cloud side does not need to participate in an entire rendering process. After responding to an angle of view in which a user browses a target scene, the device side may perform the rendering process in this application, and then display a second image obtained by rendering the first image.

In summary, the rendering method provided in this application may be implemented by using a device-cloud collaborative rendering system, or may be implemented by using a non-device-cloud collaborative rendering system. The following describes architectures of the two rendering systems.

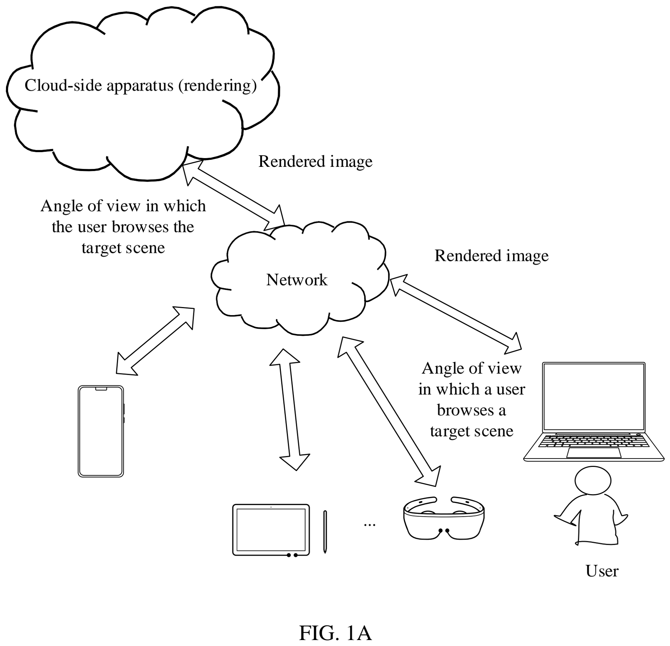

FIG. 1A is a diagram of an architecture of a device-cloud collaborative rendering system according to an embodiment of this application.

As shown in FIG. 1A, the device-cloud collaborative rendering system provided in this embodiment of this application includes a cloud-side apparatus and a device-side apparatus, and the cloud-side apparatus and the device-side apparatus communicate with each other through a network.

Various types of applications may be installed on the device-side apparatus. Application of a three-dimensional map is used as an example. When a user browses a target scene, the device-side apparatus may receive an angle of view in which the user browses the target scene and that is provided by the user by using an input apparatus such as a mouse, a keyboard, a screen, or a virtual reality (virtual reality, VR)/augmented reality (augmented reality, AR) device. Then, the device-side apparatus may transmit, to the cloud-side apparatus through the network, the angle of view in which the user browses the target scene. The cloud-side apparatus may restore, based on the angle of view in which the user browses the target scene and compressed texture information, a color value of each pixel in a to-be-rendered first image corresponding to the angle of view in each of a plurality of directions corresponding to the pixel, where the plurality of directions corresponding to each pixel are directions in which color values are sampled from a radiance field model of the target scene; perform rendering based on the color value of each pixel in the first image in each of the plurality of directions corresponding to the pixel, to obtain a second image; and return the second image to the device-side apparatus. After receiving the second image, the device-side apparatus may display the second image.

The cloud-side apparatus may be a worker node in a cloud system. The cloud system further includes a scheduling node. After receiving a rendering request (including the angle of view in which the user browses the target scene) from the device-side apparatus, the scheduling node may generate a rendering task based on the rendering request, and allocate the rendering task to one or more worker nodes in the cloud system for execution.

A function of the scheduling node may be implemented by using software or hardware.

The scheduling node is used as an example of a software functional unit, and the scheduling node may include code run on a computing instance. The computing instance may include at least one of a physical host (computing device), a virtual machine, and a container. Further, there may be one or more computing instances. For example, the scheduling node may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. VPCs are interconnected through the communication gateway.

The scheduling node is used as an example of a hardware functional unit, and the scheduling node may include at least one computing device such as a server. Alternatively, the scheduling node may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

A plurality of computing devices included in the scheduling node may be distributed in a same region, or may be distributed in different regions. The plurality of computing devices included in the scheduling node may be distributed in a same AZ, or may be distributed in different AZs. Similarly, the plurality of computing devices included in the scheduling node may be distributed in a same VPC, or may be distributed in a plurality of VPCs. The plurality of computing devices may be any combination of computing devices such as a server, an ASIC, a PLD, a CPLD, an FPGA, and a GAL.

The worker node may be a physical machine, or may be a computing instance such as a virtual machine (virtual machine, VM) or a container (container). The worker node may include one or more central processing units (central processing unit, CPU), graphics processing units (graphics processing unit, GPU), and the like. The worker node may alternatively be a CPU or a GPU.

The device-side apparatus may be a terminal device. The terminal device, also referred to as user equipment (user equipment, UE), a mobile station (mobile station, MS), a mobile terminal (mobile terminal, MT), or the like, is a device that includes a wireless communication function (providing voice/data connectivity to the user), for example, a handheld device with a wireless connection function. Currently, some examples of the terminal device are a mobile phone (mobile phone), a tablet computer, a notebook computer, a palmtop computer, a notebook computer, a wireless router, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in an internet of vehicles, a wireless terminal in telesurgery (remote surgery), a wireless terminal in smart grid (smart grid), a wireless terminal in transportation safety (transportation safety), a wireless terminal in smart city (smart city), a wireless terminal in a smart home (smart home), and the like. For example, the wireless terminal in the internet of vehicles may be a vehicle-mounted device, an entire vehicle device, a vehicle-mounted module, a vehicle, or the like. The wireless terminal in industrial control may be a robot, or the like. For example, the wireless terminal in self driving may be an uncrewed aerial vehicle. The terminal device may be a device that runs an Android system, an iOS system, a Windows system, or another system. An application that needs to perform rendering for an application scene to obtain a two-dimensional image may run in the terminal device, for example, a game application, a lock screen application, or a map application.

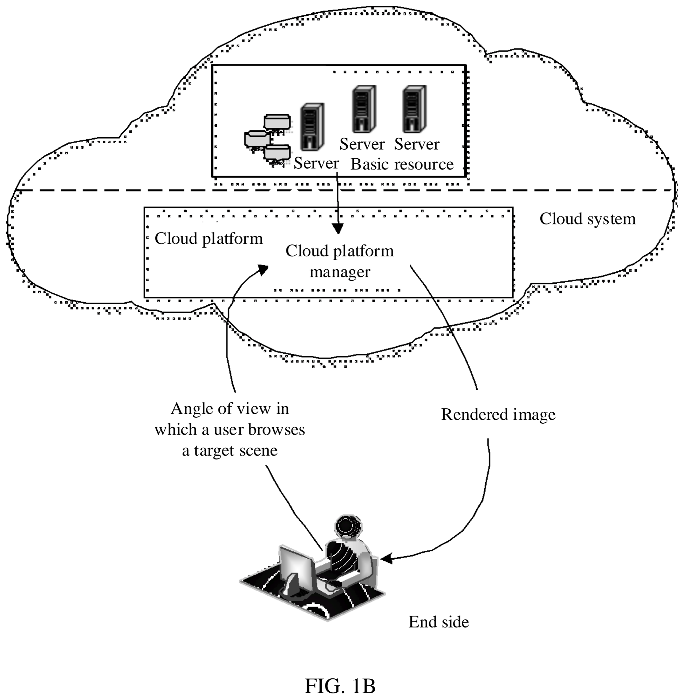

The foregoing describes a cloud system in FIG. 1A. As shown in FIG. 1B, a cloud system includes a cloud platform and a basic resource. The cloud platform includes a cloud platform manager, and the scheduling node described above may be a cloud platform manager in FIG. 1B. The basic resource may include a plurality of servers, and each server may be one worker node, or each server may include a plurality of worker nodes.

A worker node in FIG. 1B may be a computing device card or a virtual machine (virtual machine, VM). The computing device card may be at least one of a central processing unit (central processing unit, CPU), a graphics processing unit (graphic processing unit GPU), and a neural-network processing unit (neural processing unit, NPU).

The cloud platform manager maintains or periodically collects information about each worker node in the basic resource, for example, information such as a resource use status (resource usage or a resource idle rate) of each worker node. The information may be used as auxiliary decision-making information when a rendering task is assigned.

The cloud platform manager may receive a rendering request from a device-side apparatus, where the rendering request includes an angle of view in which a user browses a target scene; generate one or more rendering tasks based on the rendering request; and allocate the one or more rendering tasks to one or more worker nodes to execute the corresponding rendering tasks.

After the worker node completes the rendering task, the cloud platform manager may return a rendered image to the user.

A rendering system in a non-device-cloud system may include an electronic device. The electronic device may be a cloud-side apparatus or a device-side apparatus. When the electronic device is a cloud-side apparatus, rendering may be performed based on an angle of view preset by a developer. When the electronic device is a device-side apparatus, a cloud side does not need to participate in an entire rendering process. After responding to the angle of view in which the user browses the target scene, the device-side apparatus may perform the rendering process in this application, and then display a second image obtained by rendering the first image.

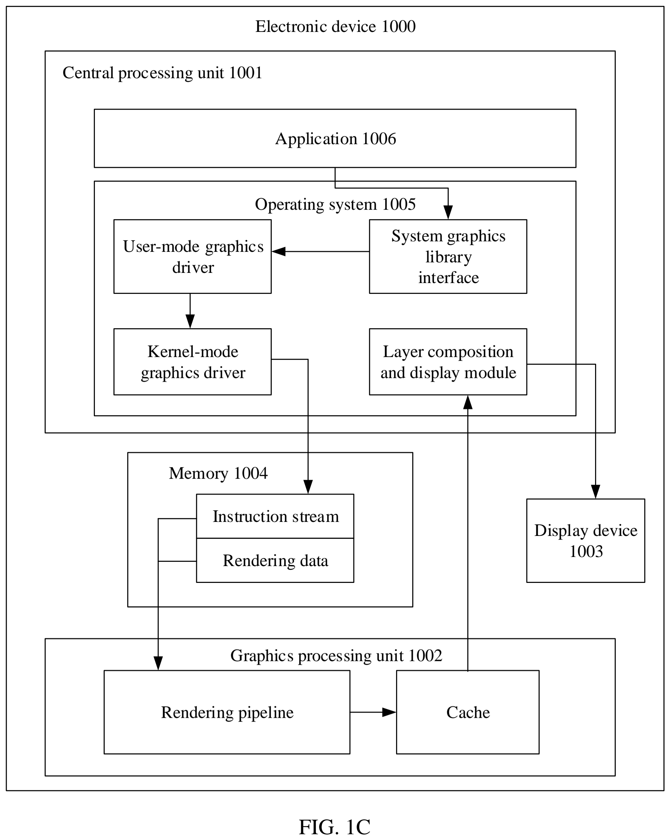

A structure of the electronic device may be understood with reference to FIG. 1C. In a possible embodiment, as shown in FIG. 1C, an electronic device 1000 may include: a central processing unit 1001, a graphics processing unit 1002, a display device 1003, and a memory 1004. Optionally, the electronic device 1000 may further include at least one communication bus (not shown in FIG. 1C) for implementing connection and communication between components.

It should be understood that the components in the electronic device 1000 may alternatively be coupled to each other through another connector, and the another connector may include various interfaces, transmission lines, buses, or the like. The components in the electronic device 1000 may alternatively be connected in a radial manner by using the central processing unit 1001 as a center. In embodiments of this application, coupling is mutual electrical connection or communication, including direct connection or indirect connection via another device.

The central processing unit 1001 and the graphics processing unit 1002 are connected in a plurality of manners, which are not limited to the manner shown in FIG. 1C. The central processing unit 1001 and the graphics processing unit 1002 in the electronic device 1000 may be located on a same chip, or each may be independent chips.

The following briefly describes functions of the central processing unit 1001, the graphics processing unit 1002, the display device 1003, and the memory 1004.

The central processing unit 1001 is configured to run an operating system 1005 and an application 1006. The application 1006 may be a graphical application, for example, a game or a video player. The operating system 1005 provides a system graphics library interface. The application 1006 generates both an instruction stream for rendering a graphic or an image frame and required related rendering data through the system graphics library interface and a driver program provided by the operating system 1005, such as a user-mode graphics driver and/or a kernel-mode graphics driver. The system graphics library includes but is not limited to a system graphics library such as an open graphics library for embedded systems (open graphics library for embedded systems, OpenGL ES), a Khronos platform graphics interface (Khronos platform graphics interface), or Vulkan (a cross-platform graphics application programming interface). The instruction stream includes a series of instructions, and these instructions are usually instructions for invoking the system graphics library interface.

Optionally, the central processing unit 1001 may include at least one of the following types of processors: an application processor, one or more microprocessors, a digital signal processor (digital signal processor, DSP), a microcontroller unit (microcontroller unit, MCU), an artificial intelligence processor, or the like.

The central processing unit 1001 may further include a necessary hardware accelerator, for example, an application-specific integrated circuit (application-specific integrated circuit, ASIC), a field programmable gate array (field programmable gate array, FPGA), or an integrated circuit for implementing a logical operation. The central processing unit 1001 may be coupled to one or more data buses, to transmit data and instructions between the components in the electronic device 1000.

The graphics processing unit 1002 is configured to: receive a graphics instruction stream sent by the central processing unit 1001, generate a rendering target through a rendering pipeline (pipeline), and display the rendering target on the display device 1003 through a layer composition and display module in the operating system. The rendering pipeline may also be referred to as a rendering pipeline, a pixel pipeline, or a pixel pipeline, and is a parallel processing unit, for processing a graphics signal, in the graphics processing unit 1002. The graphics processing unit 1002 may include a plurality of rendering pipelines, and the plurality of rendering pipelines may independently process graphics signals in parallel. For example, the rendering pipeline may perform a series of operations in a process of rendering a graphic or an image frame. Typical operations may include vertex processing (Vertex Processing), primitive processing (Primitive Processing), rasterization (Rasterization), fragment processing (Fragment Processing), and the like.

Optionally, the graphics processing unit 1002 may include a general-purpose graphics processing unit that executes software, for example, a GPU or another type of dedicated graphics processing unit.

The display device 1003 is configured to display various images generated by the electronic device 1000. The image may be a graphical user interface (graphical user interface, GUI) of the operating system or image data (including still image data and video data) processed by the graphics processing unit 1002.

Optionally, the display device 1003 may include any suitable type of display, for example, a liquid crystal display (liquid crystal display, LCD), a plasma display, or an organic light-emitting diode (organic light-emitting diode, OLED) display.

The memory 1004 is a transmission channel between the central processing unit 1001 and the graphics processing unit 1002, and may be a double data rate synchronous dynamic random access memory (double data rate synchronous dynamic random access memory, DDR SDRAM) or another type of cache.

It should be noted that when the electronic device is a cloud-side apparatus, the electronic device may not include the display device 1003.

The foregoing describes the rendering system provided in embodiments of this application and a possible structure of the electronic device. The following describes a rendering method provided in embodiments of this application. In the rendering method, content executed by a cloud-side apparatus may be executed by the cloud-side apparatus, or may be executed by a component (for example, a processor, a chip, or a chip system) in the cloud-side apparatus. Similarly, content executed by a device-side apparatus may be executed by the device-side apparatus, or may be executed by a component (for example, a processor, a chip, or a chip system) in the device-side apparatus.

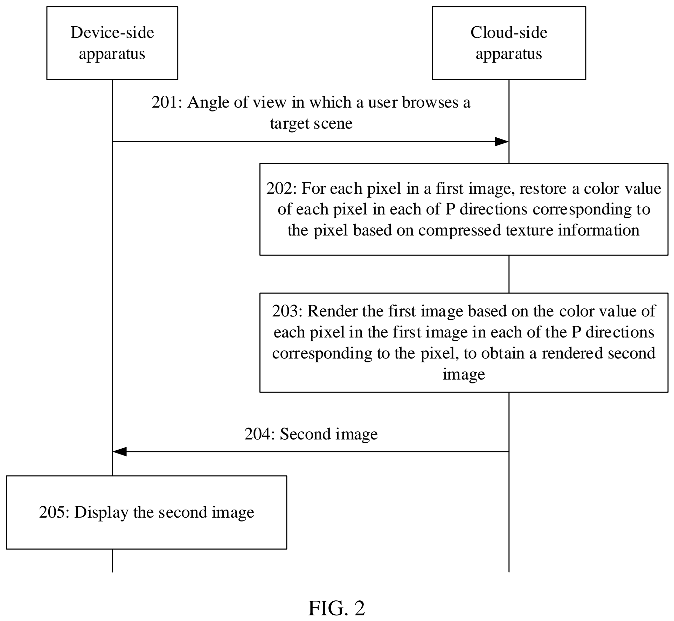

FIG. 2 is a diagram of an embodiment of a rendering method according to an embodiment of this application.

As shown in FIG. 2, with reference to the foregoing device-cloud collaborative rendering system, an embodiment of the rendering method provided in this embodiment of this application includes the following steps.

201: A device-side apparatus sends an angle of view in which a user browses a target scene. Correspondingly, a cloud-side apparatus obtains the angle of view in which the user browses the target scene.

In this application, the target scene may be a scene, for example, a city, an island, or a country, that may be browsed on a three-dimensional map. Certainly, the target scene may alternatively be an industrial application scene, for example, a device in a factory or a shelf in a warehouse. The target scene is not limited in this application. The rendering solution provided in this application may be used in any scene for which rendering needs to be performed.

202: For each pixel in a first image, the cloud-side apparatus restores a color value of each pixel in each of P directions corresponding to the pixel based on compressed texture information.

The first image is a to-be-rendered image that is of the target scene and that corresponds to the angle of view, the P directions corresponding to each pixel are directions in which color values are sampled from a radiance field model of the target scene, P is an integer greater than 1, and the compressed texture information includes compression information of the color values in the P directions corresponding to each pixel.

In this application, the radiance field model of the target scene is a radiance field model obtained based on a point cloud and a picture of the target scene, and the radiance field model is a function of information such as a three-dimensional coordinate point, a direction, a color, and transparency of the target scene in space.

In this application, a texture is a color value. Brightness of pixels on images corresponding to different angles of view is usually different. Therefore, even pixels at a same position may correspond to different color values in different angles of view.

203: The cloud-side apparatus renders the first image based on the color value of each pixel in the first image in each of the P directions corresponding to the pixel, to obtain a rendered second image.

In this application, both the first image and the second image are images that are of the target scene and that may be seen at a position of the angle of view. A difference lies in that the first image is an image that is not rendered, and the second image is a rendered image.

204: The cloud-side apparatus sends the second image. Correspondingly, the device-side apparatus receives the second image.

205: The device-side apparatus displays the second image.

According to the technical solution provided in this application, when texture sampling is performed on the target scene, color values of each pixel in a plurality of directions are obtained from the radiance field model of the target scene. In this way, more light field information can be reserved, to facilitate subsequent high-quality high-fidelity rendering. In addition, in the solution provided in this application, the compressed texture information is stored, and a color value of a pixel in a corresponding angle of view is restored only when the color value needs to be used. In this way, a storage requirement can be reduced. In addition, during rendering, rendering only needs to be performed based on the color value. Rendering may be performed through a conventional rendering pipeline, to greatly increase a rendering speed. It can be learned from the foregoing that, in the solution provided in this application, high-fidelity real-time rendering can be implemented for a large-scale scene by using small storage space.

With reference to the non-device-cloud collaborative rendering system, when the rendering method provided in this embodiment of this application is independently performed by a cloud apparatus, the cloud apparatus performs the step in which the cloud-side apparatus obtains the angle of view in which the user browses the target scene in the embodiment corresponding to FIG. 2, and steps 202 and 203. When the rendering method provided in this embodiment of this application is independently performed by the device-side apparatus, the device-side apparatus performs the step in which the device-side apparatus obtains the angle of view in which the user browses the target scene in the embodiment corresponding to FIG. 2, and steps 202, 203, and 205.

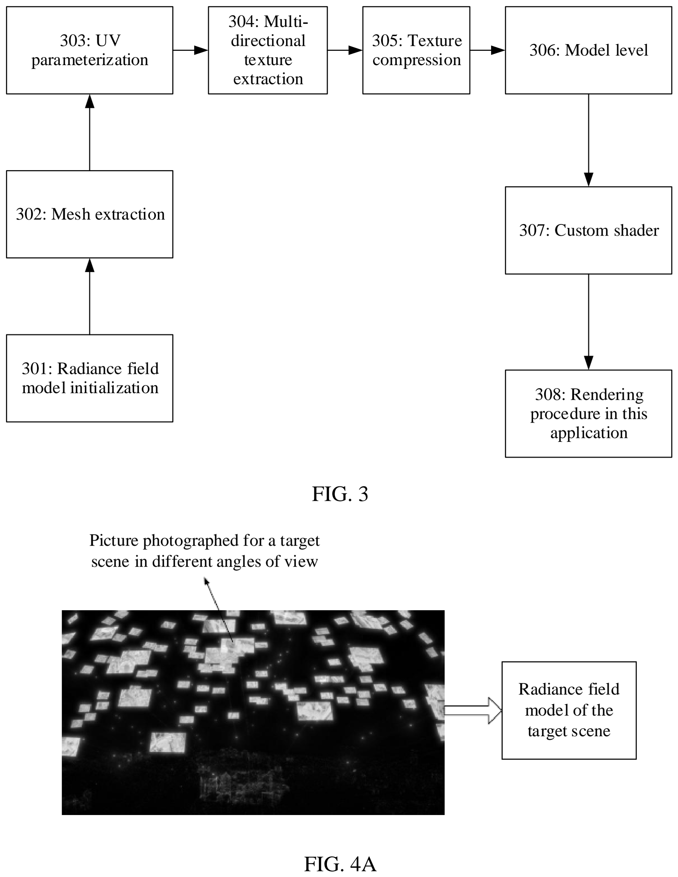

To implement high-fidelity real-time rendering for the target scene above, the following preparations before rendering may be made in this embodiment of this application. The following provides descriptions with reference to FIG. 3.

As shown in FIG. 3, the preparations before rendering provided in this embodiment of this application may include the following steps.

### 301: Radiance field model initialization.

As shown in FIG. 4A, in this embodiment of this application, a picture and a point cloud that are photographed for the target scene in different angles of view may be input into a radiance field generation model, to obtain a radiance field model of the target scene.

The radiance field model is a function of information such as a three-dimensional coordinate point, a direction, a color, and transparency of the target scene in space.

### 302: Mesh extraction.

The radiance field model of the target scene may be meshed. In this way, the radiance field model of the target scene corresponds to a three-dimensional mesh, and the three-dimensional mesh indicates a position of a coordinate point of the target scene in three-dimensional space.

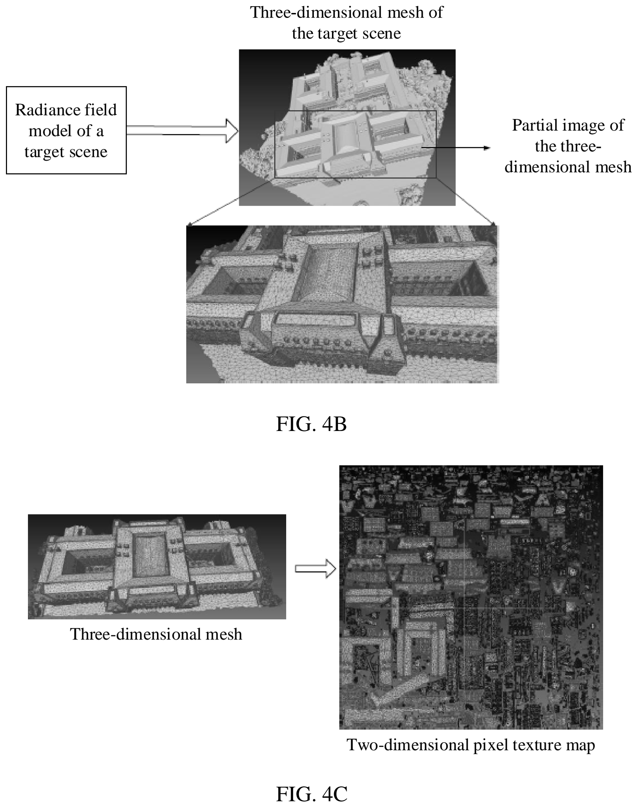

An example diagram obtained after the radiance field model of the target scene is meshed may be understood with reference to FIG. 4B.

### 303: UV parameterization.

A two-dimensional pixel texture map may be obtained by performing UV parameterization processing on the three-dimensional mesh, and the two-dimensional pixel texture map includes N texture pixels, for example, 4096*4096 pixels.

The foregoing process of performing UV parameterization on the three-dimensional mesh may be understood with reference to FIG. 4C. As shown in FIG. 4C, for ease of representation, UV parameterization is performed on a screenshot of a partial image of the three-dimensional mesh, and spatial coordinates on the three-dimensional mesh are converted into pixels in two-dimensional space on UV coordinate axes.

### 304: Multi-directional texture extraction.

For these texture pixels in the two-dimensional pixel texture map, texture sampling may be performed on the radiance field model of the target scene in different directions in M directions, to obtain M sampled texture maps.

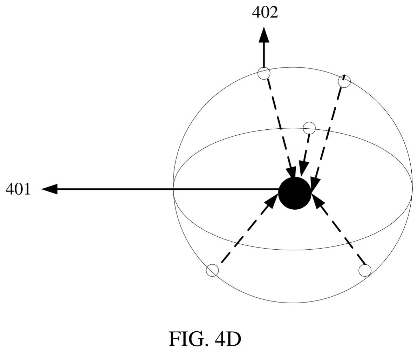

In this embodiment of this application, the M directions may be directions from points at different positions on a sphere to a center of the sphere, and the M points may be determined by performing uniform sampling on the sphere. The M directions may be understood with reference to FIG. 4D.

As shown in FIG. 4D, a solid core 401 represents the center of the sphere, and a hollow core 402 on the sphere represents a sampling point. A plurality of sampling points (represented by M sampling points) determined by performing uniform sampling on the sphere. FIG. 4D shows only several sampling points. A direction from each hollow core 402 on the sphere to the center of the sphere 401 is each of the M directions described above.

Then, for each of the M directions, a corresponding color value is obtained from the radiance field model based on each texture pixel in the two-dimensional pixel texture map in FIG. 4C (that is, a texture of the texture pixel is extracted), to obtain the M sampled texture maps. The M directions are in a one-to-one correspondence with the M sampled texture maps. Quantities of texture pixels in the M sampled texture maps are the same, and arrangement positions of the texture pixels in the M sampled texture maps are also the same. The sampled texture map indicates color values of N texture pixels in a corresponding direction.

To achieve a balance in terms of controlling a calculation amount and maintaining authenticity, a value of M may range from 40 to 100.

### 305: Texture compression.

In a texture compression process, the M sampled texture maps obtained in step 304 may be compressed through sampling singular value decomposition (singular value decomposition, SVD), to obtain a standard texture map C, K feature texture maps, and a weight matrix W corresponding to the K feature texture maps. K is a positive integer, and (1+K)<M. For example, in this application, 84 sampled texture maps may be compressed into 15 feature texture maps. In this application, the standard texture map C, the K feature texture maps, and the weight matrix W corresponding to the K feature texture maps may also be referred to as compressed texture information.

In this embodiment of this application, the standard texture map is a texture map that retains most complete color information, and may be understood as a color texture map. The feature texture map is a compressed texture map, and may be understood as a texture map that retains only some grayscale information. The M sampled texture maps are processed into one standard texture map and K feature texture maps, to reduce a requirement for storage space, and facilitate subsequent rendering.

A color value of each texture pixel in the standard texture map is obtained by averaging color values of texture pixels at a same position in the M sampled texture maps.

The K feature texture maps and the weight matrix corresponding to the K texture maps are obtained by performing dimension reduction and compression on an M*N matrix, and the M*N matrix is a matrix obtained by subtracting a color value of each texture pixel in the standard texture map from a color value of a texture pixel at a same position in the M sampled texture maps.

A difference between the M sampled texture maps and the standard texture map is obtained, and then dimension reduction and compression (which may also be referred to as low-rank compression) are performed on the M*N matrix obtained based on the difference, to reduce a data amount, and help save storage space.

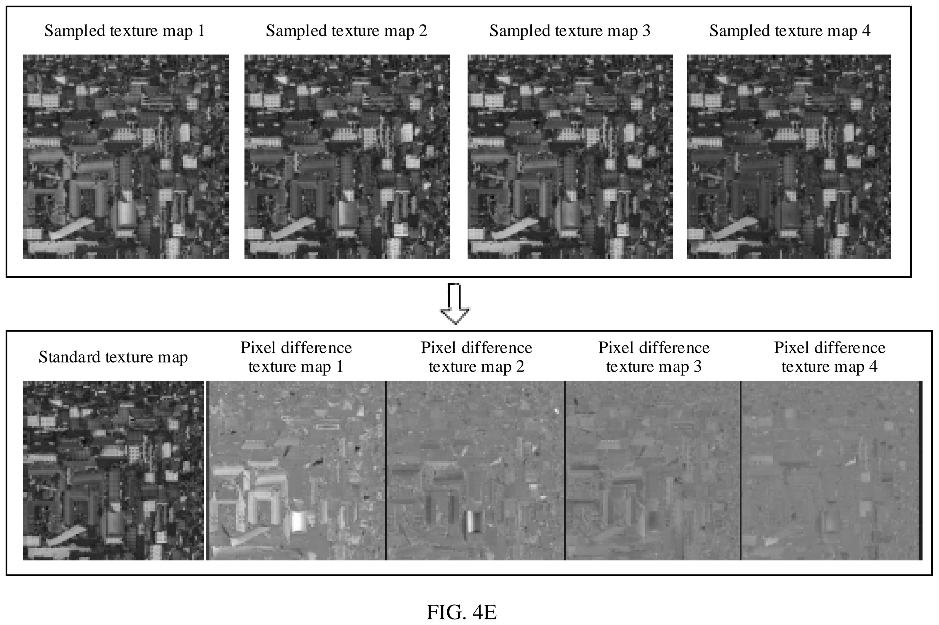

In this embodiment of this application, a process of obtaining the standard texture map and a diagram of the M*N matrix existing before dimension reduction and compression based on the M sampled texture maps may be understood with reference to FIG. 4E. As shown in FIG. 4E, there are four sampled texture maps, which respectively correspond to four different directions: a sampled texture map 1, a sampled texture map 2, a sampled texture map 3, and a sampled texture map 4. The standard texture map may be obtained by averaging color values of texture pixels at a same position in the 4 sampled texture maps. A pixel difference texture map 1 may be obtained by subtracting a color value of each texture pixel in the standard texture map from a color value of a texture pixel at a same position in the sampled texture map 1, a pixel difference texture map 2 may be obtained by subtracting a color value of each texture pixel in the standard texture map from a color value of a texture pixel at a same position in the sampled texture map 2, a pixel difference texture map 3 may be obtained by subtracting a color value of each texture pixel in the standard texture map from a color value of a texture pixel at a same position in the sampled texture map 3, and a pixel difference texture map 4 may be obtained by subtracting a color value of each texture pixel in the standard texture map from a color value of a texture pixel at a same position in the sampled texture map 4. Then, dimension reduction and compression are performed on the four pixel difference texture maps, to obtain a feature texture map. For example, one feature texture map may be obtained after dimension reduction and compression are performed on the four pixel difference texture maps in FIG. 4E.

### 306: Model level.

In this embodiment of this application, when different positions of the target scene are viewed in a same angle of view, some positions may be clear, and some positions are blurry. Therefore, importance degrees of the different positions are different during rendering. To improve rendering efficiency, in this application, multi-level of detail (Levels of Detail, LOD) processing may be performed, based on the standard texture map and the K feature texture maps that are obtained in step 305, on a mesh model used during rendering. The standard texture map and the K feature texture maps may be used at a first level. The following different levels may be obtained by performing down-sampling with different sparse degrees on the standard texture map and the K feature texture maps. In this way, when different positions of the target scene are rendered, textures may be obtained from different levels, to render corresponding positions, thereby improving rendering efficiency.

### 307: Custom shader.

According to a rendering pipeline of a conventional texture mesh, the pipeline may provide texture coordinates and an angle of view direction for each to-be-rendered pixel. In this application, P directions (for example, P=3) closest to a direction of the angle of view may be determined from the M directions based on the direction of the angle of view; a color value of the pixel in each of the P directions is restored based on the K feature texture maps and the weight matrix W; and interpolation is performed on P colors based on Barycentric coordinates, to obtain the color value of the pixel. Because the color value that is of the pixel and that is obtained through interpolation is from color values in a plurality of directions, rendering quality can be improved by rendering the pixel based on the color value that is of the pixel and that is obtained through interpolation.

In this embodiment of this application, a supplier captures a city-level aerial image, and the aerial image may be stored on a cloud distributed server. Then, steps 301 to 307 may be performed. The model or the compressed texture information obtained in the foregoing process may be stored on a cloud by using an open scene graph binary (open scene graph binary, OSGB) file, and is used for delivery of a rendering service.

A user who uses this service can open a browser on a device-side apparatus, to preview a city in the air. Specifically, the browser returns the angle of view of browsing by the user to the cloud by only moving a mouse, and the cloud renders an image, and then returns the rendered image to the browser of the user for view by the user.

### 308: Rendering procedure in this application.

The rendering procedure in this application may be understood with reference to steps 202 and 203 in the embodiment corresponding to FIG. 2. The P directions corresponding to each pixel are directions that are closest to a first direction and that are determined from M directions, the M directions are directions that are determined through spherical uniform sampling and in which texture sampling is performed on the radiance field model of the target scene, the first direction is a direction from a position of the angle of view to a three-dimensional coordinate point corresponding to each pixel, M>P, and M is an integer.

The spherical uniform sampling and the M directions may be understood with reference to the illustration and description of FIG. 4D. The first direction is a direction from a three-dimensional coordinate point in space corresponding to the pixel in the first image to the position of the angle of view, or may be understood as a direction from the position of the angle of view to the three-dimensional coordinate point. The closest directions are P directions having smallest included angles with the first direction in the M directions. In this application, the smallest included angles are P included angles in first P included angles ranked in ascending order of included angles. The closest directions are not limited to a direction with a highest degree of proximity, and may also be first P directions ranked in descending order of degrees of proximity. In this application, the P directions are directions closest to the first direction. In this way, for a corresponding pixel, the color values in the P directions have highest degrees of proximity with a color value of the pixel, and can be used to improve rendering precision of the pixel.

In step 202, the color value of each pixel in each of P directions corresponding to the pixel is restored based on the compressed texture information. The color value of each pixel in each of the P directions of each pixel is obtained by adding a 1*N matrix corresponding to the standard texture map to a product of the weight matrix corresponding to the K feature texture maps and a K*N matrix including N texture pixels in each feature texture map, and may be represented as W*T+C. Herein, C represents the 1*N matrix corresponding to the standard texture map, W represents the weight matrix (M*K matrix) corresponding to the K feature texture maps, T represents the K*N matrix corresponding to the K feature texture maps, and N is a quantity of texture pixels in the feature texture map.

In this embodiment of this application, the color value of each pixel in each of the P directions of each pixel during sampling may be restored based on the K feature texture maps, the corresponding weight matrix, and the standard texture map. In this way, the information is in a compressed state when the information is not used, and a corresponding color value may be restored when the information is used. In this way, no too much storage space is occupied, and high-quality rendering may be further implemented.

After the color value of each pixel in each of the P directions corresponding to the pixel is restored in step 202, step 203 may be performed to obtain the second image. In this embodiment of this application, the second image is obtained by rendering the first image based on a color value of each pixel in the first image in a first direction corresponding to the pixel, and the color value of each pixel in the first direction corresponding to the pixel is obtained by performing interpolation on the color value of each pixel in each of the P directions corresponding to the pixel. It is considered that because information such as brightness at a same position in different angles of view may be different, and consequently, color values at a same position in different angles of view may be different. Therefore, during image rendering, color values are obtained from a plurality of directions closest to the first direction, and then a color value in the first direction is determined, to obtain a high-fidelity image that better matches an angle of view, and improve rendering quality.

In this embodiment of this application, different positions in the second image are obtained through rendering based on textures at different levels, and the textures at the different levels are obtained by performing down-sampling with different sparse degrees on the standard texture map and the K feature texture maps. It is considered that when different positions of the target scene are viewed in a same angle of view, some positions may be clear, and some positions are blurry. Therefore, importance degrees of the different positions are different during rendering. In this way, rendering may be performed for different positions based on textures at different levels, to improve rendering efficiency.

According to the rendering method provided in this embodiment of this application, a universal OSGB file format may be supported, and an interactive frame rate (60 frames per second, frame per second, fps) may be achieved on a common graphics card for a real large-scale scene. In terms of rendering quality, compared with a texture mesh method, in this application, an overall color of a rendering result is more uniform, a high-fidelity light and shadow effect is presented, and texture details are more beautiful.

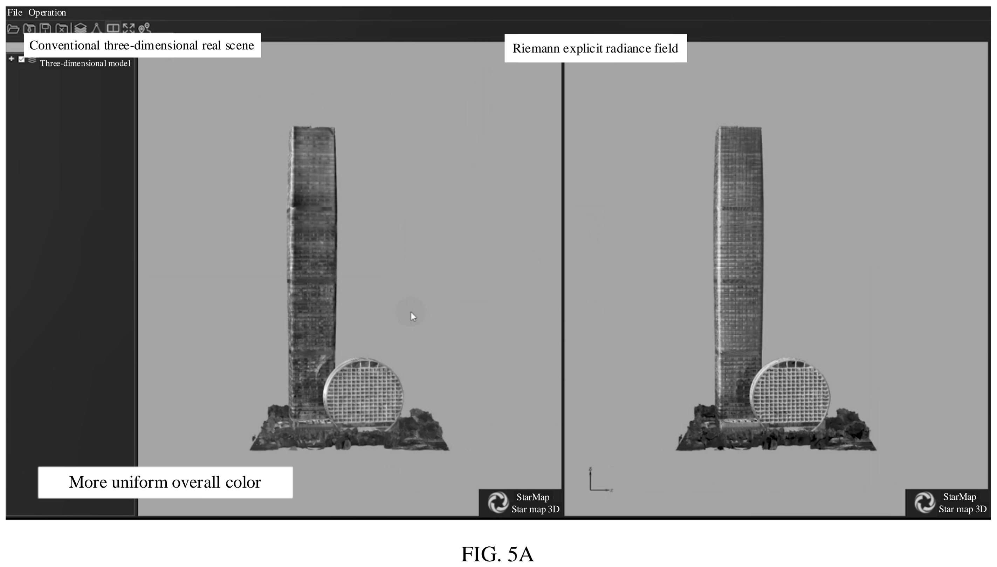

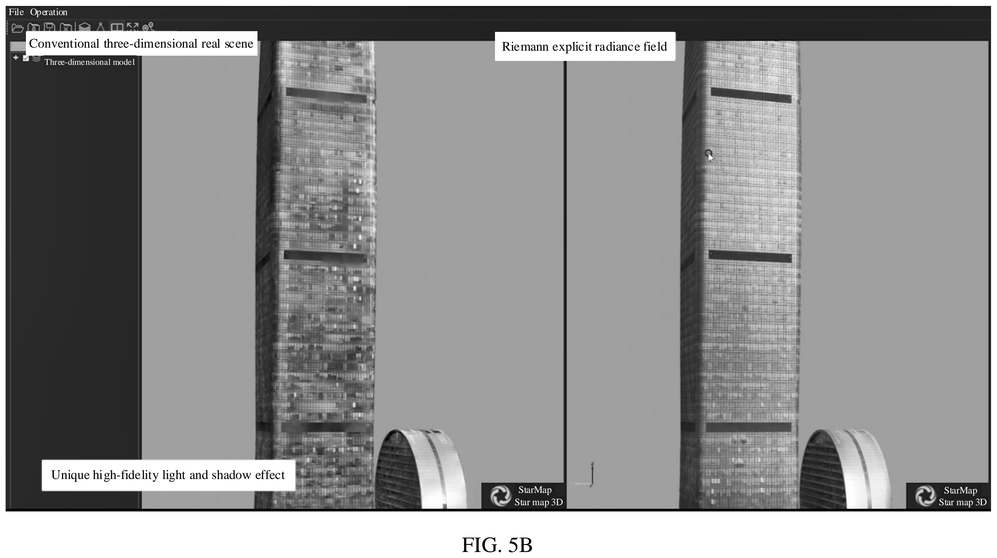

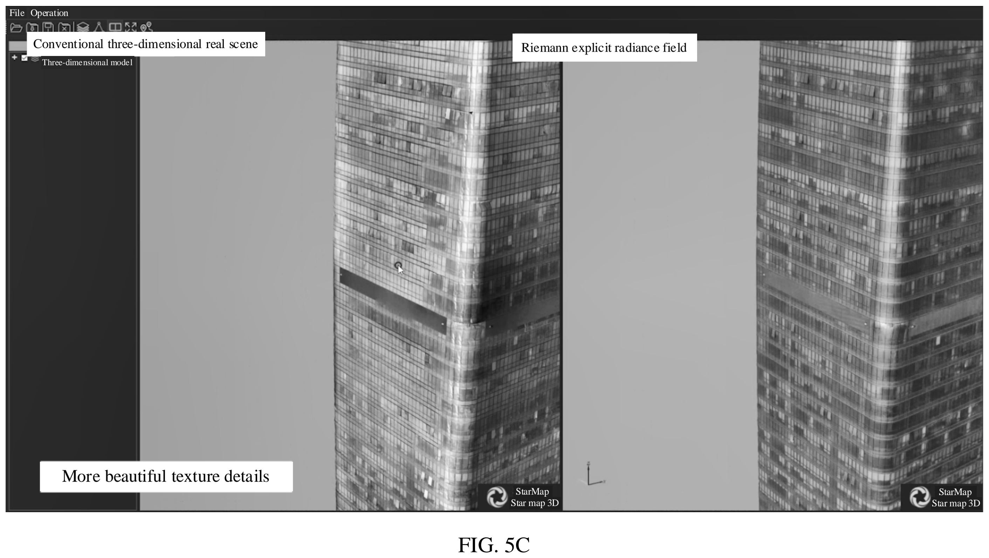

The foregoing effects of the rendering method provided in this application relative to the rendering in the texture mesh method may be understood with reference to FIG. 5A, FIG. 5B, and FIG. 5C.

In combination with the foregoing description of the rendering solution in this application, it can be learned that this application provides a brand new renderable model based on compression direction texture, which has advantages of high efficiency of a texture mesh method and high quality of a neural radiance field. In this application, multi-direction texture extraction is performed on the radiance field model, to convert a complex neural radiance field model into a custom renderable texture model. Compared with the texture mesh method, in this application, only one standard texture map is generated, and richer scene information is retained in a multi-directional texture extraction method. In this application, lightweight expression of a large scene is implemented through feature texture compression. Compared with the texture mesh method, this step does not significantly improve a memory requirement. Compared with a neural radiance field method, in this application, rendering efficiency is significantly improved based on a display radiance field technology and a standard rendering pipeline, and a custom shader related to an angle of view ensures a high-quality rendering effect. In conclusion, both a storage requirement and rendering quality in this application are good, and quick and high-quality rendering can be performed on the large-scale real scene. In addition, because the technical method in this application has features of low data dependency and a small storage requirement, the foregoing rendering process can be implemented not only for a cloud side but also for the device-side apparatus.

The foregoing describes the rendering method provided in embodiments of this application. The following describes a rendering apparatus provided in embodiments of this application with reference to the accompanying drawings.

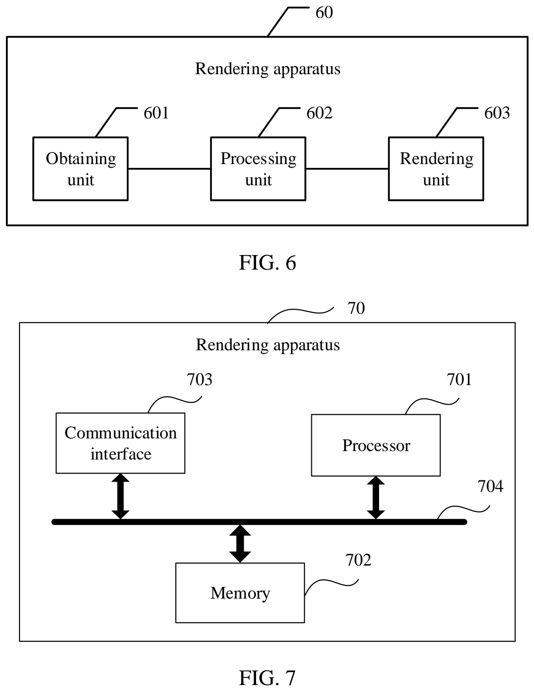

As shown in FIG. 6, a rendering apparatus 60 provided in this embodiment of this application includes:
an obtaining unit 601, configured to obtain an angle of view in which a user browses a target scene;
a processing unit 602, configured to: for each pixel in a first image, restore a color value of each pixel in each of P directions corresponding to the pixel based on compressed texture information, where the first image is a to-be-rendered image that is of the target scene and that corresponds to the angle of view, the P directions corresponding to each pixel are directions in which color values are sampled from a radiance field model of the target scene, P is an integer greater than 1, and the compressed texture information includes compression information of the color values in the P directions corresponding to each pixel; and the processing unit 602 may be configured to perform step 202 in the foregoing method embodiment; and
a rendering unit 603, configured to render the first image based on the color value of each pixel in the first image in each of the P directions corresponding to the pixel, to obtain a rendered second image, where the rendering unit 603 may be configured to perform step 203 in the foregoing method embodiment.

According to the technical solution provided in this application, when texture sampling is performed on the target scene, color values of each pixel in a plurality of directions are obtained from the radiance field model of the target scene. In this way, more light field information can be reserved, to facilitate subsequent high-quality high-fidelity rendering. In addition, in the solution provided in this application, the compressed texture information is stored, and a color value of a pixel in a corresponding angle of view is restored only when the color value needs to be used. In this way, a storage requirement can be reduced. In addition, during rendering, rendering only needs to be performed based on the color value. Rendering may be performed through a conventional rendering pipeline, to greatly increase a rendering speed. It can be learned from the foregoing that, in the solution provided in this application, high-fidelity real-time rendering can be implemented for a large-scale scene by using small storage space.

Optionally, the P directions corresponding to each pixel are directions that are closest to a first direction and that are determined from M directions, the M directions are directions that are determined through spherical uniform sampling and in which texture sampling is performed on the radiance field model of the target scene, the first direction is a direction from a position of the angle of view to a three-dimensional coordinate point corresponding to each pixel, M>P, and M is an integer.

Optionally, each of the M directions corresponds to one sampled texture map, the sampled texture map indicates color values of N texture pixels in the corresponding direction, and N is an integer greater than 1.

Optionally, the compressed texture information includes a standard texture map, K compressed feature texture maps, and a weight matrix corresponding to the K feature texture maps; and the standard texture map, the K feature texture maps, and the weight matrix corresponding to the K feature texture maps are obtained based on M sampled texture maps, K is a positive integer, and (1+K)<M.

Optionally, a color value of each texture pixel in the standard texture map is obtained by averaging color values of texture pixels at a same position in the M sampled texture maps.

Optionally, the K feature texture maps and the weight matrix corresponding to the K texture maps are obtained by performing dimension reduction and compression on an M*N matrix, and the M*N matrix is a matrix obtained by subtracting a color value of each texture pixel in the standard texture map from a color value of a texture pixel at a same position in the M sampled texture maps.

Optionally, the color value of each pixel in each of the P directions of each pixel is obtained by adding a 1*N matrix corresponding to the standard texture map to a product of the weight matrix corresponding to the K feature texture maps and a K*N matrix including N texture pixels in each feature texture map.

Optionally, the second image is obtained by rendering the first image based on a color value of each pixel in the first image in a first direction corresponding to the pixel, and the color value of each pixel in the first direction corresponding to the pixel is obtained by performing interpolation on the color value of each pixel in each of the P directions corresponding to the pixel.

Optionally, different positions in the second image are obtained through rendering based on textures at different levels, and the textures at the different levels are obtained by performing down-sampling with different sparse degrees on the standard texture map and the K feature texture maps.

Optionally, M sampled texture maps corresponding to the M directions are obtained by performing texture sampling on the radiance field model of the target scene based on a two-dimensional pixel texture map.

Optionally, the two-dimensional pixel texture map is obtained by performing UV parameterization processing on a three-dimensional mesh of the radiance field model.

The rendering apparatus provided in this embodiment of this application may be understood with reference to corresponding content in the method embodiment part described above. Details are not described herein again.

FIG. 7 is a diagram of a structure of another rendering apparatus 70 according to this application. Details are as follows:
The rendering apparatus 70 may include a processor 701 and a memory 702. The processor 701, the memory 702, and a communication interface 703 are interconnected through a bus 704. The memory 702 stores program instructions and data.

The memory 702 stores program instructions and data corresponding to the steps in FIG. 1A to FIG. 5C. More specifically, the processor may alternatively be a processor for processing an image, for example, a GPU or a CPU for processing an image.

The processor 701 is configured to perform the method steps performed by the rendering apparatus in any one of embodiments in FIG. 1A to FIG. 5C.

Optionally, the communication interface 703 is configured to receive or send data.

An embodiment of this application further provides a computer-readable storage medium. The computer-readable storage medium stores a program. When the program is run on a computer, the computer is enabled to perform the steps in the method described in embodiments shown in FIG. 1A to FIG. 5C.

Optionally, the rendering apparatus shown in FIG. 7 is a chip.

An embodiment of this application further provides a rendering apparatus. The rendering apparatus may also be referred to as a digital processing chip or a chip. The chip includes a processing unit and a communication interface. The processing unit obtains program instructions through the communication interface. The program instructions are executed by the processing unit. The processing unit is configured to perform the method steps shown in any one of embodiments in FIG. 1A to FIG. *5C**.*

An embodiment of this application further provides a digital processing chip. The digital processing chip integrates a circuit and one or more interfaces for implementing the processor 701 or a function of the processor 701. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements, based on program code stored in an external memory, the steps in the method described in any one of embodiments in FIG. 1A to FIG. 5C.

An embodiment of this application further provides a computer-readable storage medium. The computer-readable storage medium stores instructions. When the instructions are run on an electronic device, the electronic device is enabled to perform the steps in the method described in any one of embodiments shown in FIG. 1A to FIG. 5C.

An embodiment of this application further provides a computer program product. When the computer program product runs on a computer, the computer is enabled to perform the steps of the method described in any one of embodiments shown in FIG. 1A to FIG. 5C.

The image processing apparatus provided in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, to enable the chip in a server to perform the rendering method described in embodiments shown in FIG. 1A to FIG. 5C. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may include a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. A general purpose processor may be a microprocessor, any regular processor, or the like.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement the foregoing embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or transmitted from one computer-readable storage medium to another computer-readable storage medium. For example, the computer instructions may be transmitted from one website site, computer, server or data center to another website site, computer, server or data center in a wired (for example, coaxial cable, optical fiber, digital subscriber line (DSL)) or wireless (for example, infrared, wireless, microwave) manner. The computer-readable storage medium may be any usable medium that can be stored by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. A rendering method, comprising:
obtaining an angle of view in which a user browses a target scene;
for each pixel in a first image, restoring a color value of each pixel in each of P directions corresponding to the pixel based on compressed texture information, wherein the first image is a to-be-rendered image that is of the target scene and that corresponds to the angle of view, the P directions corresponding to each pixel are directions in which color values are sampled from a radiance field model of the target scene, P is an integer greater than 1, and the compressed texture information comprises compression information of the color values in the P directions corresponding to each pixel; and
rendering the first image based on the color value of each pixel in the first image in each of the P directions corresponding to the pixel, to obtain a rendered second image.

2. The method according to claim 1, wherein the P directions corresponding to each pixel are directions that are closest to a first direction and that are determined from M directions, the M directions are directions that are determined through spherical uniform sampling and in which texture sampling is performed on the radiance field model of the target scene, the first direction is a direction from a position of the angle of view to a three-dimensional coordinate point corresponding to each pixel, M>P, and M is an integer.

3. The method according to claim 2, wherein each of the M directions corresponds to one sampled texture map, the sampled texture map indicates color values of N texture pixels in the corresponding direction, and N is an integer greater than 1.

4. The method according to claim 3, wherein the compressed texture information comprises a standard texture map, K compressed feature texture maps, and a weight matrix corresponding to the K feature texture maps; and
the standard texture map, the K feature texture maps, and the weight matrix corresponding to the K feature texture maps are obtained based on the M sampled texture maps, K is a positive integer, and (1+K)<M.

5. The method according to claim 4, wherein a color value of each texture pixel in the standard texture map is obtained by averaging color values of texture pixels at a same position in the M sampled texture maps.

6. The method according to claim 4 or 5, wherein the K feature texture maps and the weight matrix corresponding to the K texture maps are obtained by performing dimension reduction and compression on an M*N matrix, and the M*N matrix is a matrix obtained by subtracting a color value of each texture pixel in the standard texture map from a color value of a texture pixel at a same position in the M sampled texture maps.

7. The method according to claim 6, wherein the color value of each pixel in each of the P directions of each pixel is obtained by adding a 1*N matrix corresponding to the standard texture map to a product of the weight matrix corresponding to the K feature texture maps and a K*N matrix consisting of N texture pixels in each feature texture map.

8. The method according to any one of claims 2 to 7, wherein the second image is obtained by rendering the first image based on a color value of each pixel in the first image in a first direction corresponding to the pixel, and the color value of each pixel in the first direction corresponding to the pixel is obtained by performing interpolation on the color value of each pixel in each of the P directions corresponding to the pixel.

9. The method according to any one of claims 4 to 7, wherein different positions in the second image are obtained through rendering based on textures at different levels, and the textures at the different levels are obtained by performing down-sampling with different sparse degrees on the standard texture map and the K feature texture maps.

10. The method according to any one of claims 4 to 9, wherein M sampled texture maps corresponding to the M directions are obtained by performing texture sampling on the radiance field model of the target scene based on a two-dimensional pixel texture map.

11. The method according to claim 10, wherein the two-dimensional pixel texture map is obtained by performing UV parameterization processing on a three-dimensional mesh of the radiance field model.

12. The method according to any one of claims 1 to 11, wherein the target scene is a large-scale real scene.

13. A rendering apparatus, comprising:
an obtaining unit, configured to obtain an angle of view in which a user browses a target scene;
a processing unit, configured to: for each pixel in a first image, restore a color value of each pixel in each of P directions corresponding to the pixel based on compressed texture information, wherein the first image is a to-be-rendered image that is of the target scene and that corresponds to the angle of view, the P directions corresponding to each pixel are directions in which color values are sampled from a radiance field model of the target scene, P is an integer greater than 1, and the compressed texture information comprises compression information of the color values in the P directions corresponding to each pixel; and
a rendering unit, configured to render the first image based on the color value of each pixel in the first image in each of the P directions corresponding to the pixel, to obtain a rendered second image.

14. The apparatus according to claim 13, wherein the P directions corresponding to each pixel are directions that are closest to a first direction and that are determined from M directions, the M directions are directions that are determined through spherical uniform sampling and in which texture sampling is performed on the radiance field model of the target scene, the first direction is a direction from a position of the angle of view to a three-dimensional coordinate point corresponding to each pixel, M>P, and M is an integer.

15. The apparatus according to claim 14, wherein each of the M directions corresponds to one sampled texture map, the sampled texture map indicates color values of N texture pixels in the corresponding direction, and N is an integer greater than 1.

16. The apparatus according to claim 15, wherein the compressed texture information comprises a standard texture map, K compressed feature texture maps, and a weight matrix corresponding to the K feature texture maps; and
the standard texture map, the K feature texture maps, and the weight matrix corresponding to the K feature texture maps are obtained based on the M sampled texture maps, K is a positive integer, and (1+K)<M.

17. The apparatus according to claim 16, wherein a color value of each texture pixel in the standard texture map is obtained by averaging color values of texture pixels at a same position in the M sampled texture maps.

18. The apparatus according to claim 16 or 17, wherein the K feature texture maps and the weight matrix corresponding to the K texture maps are obtained by performing dimension reduction and compression on an M*N matrix, and the M*N matrix is a matrix obtained by subtracting a color value of each texture pixel in the standard texture map from a color value of a texture pixel at a same position in the M sampled texture maps.

19. The apparatus according to claim 18, wherein the color value of each pixel in each of the P directions of each pixel is obtained by adding a 1 *N matrix corresponding to the standard texture map to a product of the weight matrix corresponding to the K feature texture maps and a K*N matrix consisting of N texture pixels in each feature texture map.

20. An electronic device, comprising a communication interface, a processor, and a memory, wherein the communication interface is coupled to the processor and the memory, the memory is configured to store a program or instructions, and when the program or the instructions are executed by the processor, the electronic device is enabled to perform the method according to any one of claims 1 to 12.

21. A computer-readable storage medium, wherein the computer-readable storage medium stores instructions, and when the instructions are run on an electronic device, the electronic device is enabled to perform the method according to any one of claims 1 to 12.

22. A computer program product, wherein the computer program product comprises computer program code, and when the computer program code is run on a computer, the computer is enabled to perform the method according to any one of claims 1 to 12.

23. A chip system, wherein the chip system comprises one or more interface circuits and one or more processors; the interface circuit and the processor are interconnected through a line; the interface circuit is configured to: receive a signal from a memory of an electronic device, and send the signal to the processor, wherein the signal comprises computer instructions stored in the memory; when the processor executes the computer instructions, the electronic device performs the method according to any one of claims 1 to 12; and the processor is at least one of a central processing unit or a graphics processing unit.

24. A rendering system, comprising a cloud-side apparatus and a device-side apparatus, wherein
the device-side apparatus is configured to send, to the cloud-side apparatus, an angle of view in which a user browses a target scene;
the cloud-side apparatus is configured to perform the method according to any one of claims 1 to 12; and
the device-side apparatus is configured to: receive a second image returned by the cloud-side apparatus, and display the second image.

25. A rendering system, comprising an electronic device, wherein the electronic device is configured to perform the method according to any one of claims 1 to 12, and the electronic device is a cloud-side apparatus or a device-side apparatus.
